# EUROPÄISCHE PATENTSCHRIFT

(11) **EP 3 420 605 B1**
(45) Veröffentlichungstag und Bekanntmachung des Hinweises auf die Patenterteilung: **19.08.2020**
(21) Anmeldenummer: 17716772.3
(22) Anmeldetag: 22.02.2017
(51) Int. Cl.: H01M 2/10, H01M 10/42, A47C 7/72

(54) **BEHÄLTER**
CONTAINER
RÉCIPIENT

(30) Priorität: 26.02.2016 DE 102016103480
(43) Veröffentlichungstag der Anmeldung: 02.01.2019
(73) Patentinhaber: GreenPack Mobile Energy Solutions GmbH, 12489 Berlin (DE)
(72) Erfinder: CONSTIEN, Hans-Peter, 12159 Berlin (DE)
(74) Vertreter: adares Patent- und Rechtsanwälte Reininger & Partner GmbB
(86) Internationale Anmeldenummer: PCT/DE2017/100146
(87) Internationale Veröffentlichungsnummer: WO 2017/144051

(56) Entgegenhaltungen:
- DE-A1-102013 012 250
- DE-U1-202010 013 724
- US-B1- 6 494 279

## Beschreibung

Die Erfindung betrifft einen Behälter, der sich für mindestens eine Person als Sitzgelegenheit eignet. Der Behälter weist eine Behälter-Außenkontur mit einem durch die Behälter-Außenkontur umschlossenen Behältervolumen auf. Im Behältervolumen ist ein Energiespeicher-Behälter mit einem Speicherbehälter-Volumen angeordnet, wobei der Energiespeicher-Behälter durch mindestens eine Energiespeicher-Behälterwand begrenzt und vollständig gegenüber Berührung von außen geschützt ist und zur vollständigen Aufnahme mindestens eines portablen, aufladbaren elektrischen Energiespeichers ausgebildet ist. Im Energiespeicher-Behälter ist mindestens ein Ladeanschluss für den portablen, aufladbaren elektrischen Energiespeicher angeordnet. Weiterhin weist der Behälter eine im Behältervolumen angeordnete Ladeelektronikeinrichtung zur Ladesteuerung eines an den Ladeanschluss angeschlossenen portablen, aufladbaren elektrischen Energiespeichers und
einen elektrischen Anschluss zum Versorgen der Ladeelektronikeinrichtung des Behälters mit elektrischer Energie aus einem externen Energie-Versorgungsnetz auf. In der mindestens einen Energiespeicher-Behälterwand ist eine Klappe ausgebildet, mit der der Energiespeicher-Behälter gegenüber der Umgebung des Behälters öffenbar und verschließbar ist, wobei die Klappe so dimensioniert ist, dass sich der portable, aufladbare elektrische Energiespeicher in den Energiespeicher-Behälter einsetzen und aus dem Energiespeicher-Behälter herausnehmen lässt.

Aus der deutschen Patentanmeldung DE3803903A1 ist ein solcher Behälter in Form eines Sitzmöbels bekannt. Dieses Sitzmöbel ist als so genannte Solar-Sitzbank ausgebildet. Die Sitzbank verfügt insbesondere über eine Sitzfläche, einen elektrischen Energiespeicher sowie einen Anschluss an ein externes Energie-Versorgungsnetz. Der elektrische Energiespeicher befindet sich zusammen mit der Ladeelektronikeinrichtung in einem Energiespeicher-Behälter unter der Sitzfläche. Dieser Energiespeicherbehälter kann mittels eines Deckels von seiner Rückseite her geöffnet werden.

Nachteilig an diesem als Sitzgelegenheit geeigneten Behälter ist, dass vom elektrischen Energiespeicher insbesondere im Falle einer während des Aufladens auftretenden Überhitzung eine Brandgefahr für den gesamten Behälter ausgeht.

DE 20 2010 013 724 U1 beschreibt einen Behälter gemäß dem Oberbegriff des Anspruchs 1, bei dem eine Trennwand das Behältervolumen in einen oberen und einen unteren Bereich trennt. Die Ladeelektronikeinrichtung ist im oberen Bereich angeordnet, so dass sie außerhalb des Energiespeicher-Behälters im Behältervolumen angeordnet ist, während der elektrische Energiespeicher im unteren Bereich d.h. im Energiespeicher-Behälter angeordnet ist. Der elektrische Energiespeicher ist über eine als Klappe ausgebildete Seitenwand erreichbar. Nachteilig an diesem Batteriebehälter ist, dass insbesondere im Falle einer während des Aufladens auftretenden Überhitzung eine Brandgefahr für den gesamten Behälter ausgeht.

US6,494,279 B1 beschriebt ferner einen Gabelstapler, der einen explosionsgeschützten Behälter aufweist, auf den ein Sitz montiert ist. Der Behälter dient zur Aufnahme einer Batterie, die ausgelegt ist, den Gabelstapler mit Energie zu versorgen. Zum Laden der Batterie wird die Batterie dem Behälter entnommen.

DE 10 2013 012 250 A1 beschreibt einen Hochleistungs- oder Hochenergiespeicher mit Betriebsraum für elektrische Anlagen mit entgasungsfreien Batterien, der eine Isolierung oder Dämmung aufweist, die im Ereignisfall ein Löschmittel freisetzt oder Partikel aufnehmen kann.

Der Erfindung liegt daher die Aufgabe zu Grunde, einen Behälter mit einer erhöhten Brandsicherheit bereitzustellen.

Diese Aufgabe wird durch einen Behälter mit den Merkmalen des Anspruchs 1 gelöst.

Als Ladeelektronikeinrichtung im Sinne der vorliegenden Erfindung gelten alle für den Vorgang des Ladens des elektrischen Energiespeichers zusammenwirkenden elektrischen und elektronischen Bauteile abgesehen von stromführenden Leitungen oder Anschlüssen. Stromführende Leitungen oder Anschlüsse dieser Art sind beispielsweise die Ladeanschlüsse, die für die Funktionalität des Ladens der elektrischen Energiespeicher benötigt werden.

Dadurch, dass das Speicherbehälter-Volumen des Energiespeicher-Behälters gemäß IP54 oder IP64 (nach DIN EN 60529) vollständig gegenüber Berührungen von außen geschützt ist, gilt dies auch für die darin angeordneten elektrischen Energiespeicher. Umgekehrt sind auch die außerhalb des Speicherbehälter-Volumens angeordneten Bauelemente und Strukturen des Behälters im Falle einer Überhitzung der elektrischen Energiespeicher gegenüber diesen strukturell getrennt und somit in einem gewissen Maße vor diesen geschützt.

Der Behälter ist bevorzugt als Möbelstück ausgebildet und eignet sich auch zum darauf Sitzen. Die Eignung als Sitzgelegenheit bedingt nicht, dass für eine Person ein bequemes Sitzen ermöglicht ist. Diese Eignung bedingt lediglich, dass der Behälter eine gewisse Mindestgröße aufweist, so dass ihn eine Person als Sitzgelegenheit nutzen kann. Auch ein Behälter mit der Größe eines Schuhkartons kann als-unbequeme - Sitzgelegenheit dienen. Die Eignung setzt auch nicht voraus, dass der Behälter eine ebene Sitzfläche ausbilden muss. Die Sitzfläche kann geneigt und mit Kanten ausgebildet sein.

Der Behälter hat die bevorzugte optische Anmutung eines Sitzmöbelstücks mit dafür geeigneten Dimensionierungen. Der Behälter kann aber auch in einem Regal oder Schrank installiert werden, wobei mehrere Behälter übereinander und/oder nebeneinander angeordnet sein können.

Das Gewicht des Behälters hat die Wirkung einer Gegengewichtskraft beim Entnehmen eines Energiespeichers aus dem Behälter. Zur Verstärkung dieses Effektes lässt sich auch eine Montageeinrichtung vorsehen, um den Behälter an einer Wand oder auf seiner Stellfläche zu verankern.

Weiterhin ist der Energiespeicher-Behälter bevorzugt so groß ausgebildet, dass das Speicherbehälter-Volumen über 50% des gesamten Behältervolumens einnimmt.

Die Klappe weist einen Verschlussmechanismus und eine Klappendichtung auf, wobei die Klappe, die Klappendichtung und die mindestens eine Energiespeicher-Behälterwand als Bauelemente ausgeführt sind, die zumindest feuerhemmend gemäß der Feuerwiderstandsklasse F30 (nach DIN4102) sind.

Die Klappe, Klappendichtung und die mindestens eine Energiespeicher-Behälterwand sind somit in einem Material ausgestaltet, dass die Klappe, die Klappendichtung und die mindestens eine Energiespeicher-Behälterwand im Brandfall für 30 Minuten ihre Funktion behalten. Dies verhindert, dass ein in im Inneren des Energiespeicher-Behälters ausbrechendes Feuer sich unmittelbar auf die übrigen Bereiche des Behälters und/oder die Behälterumgebung ausbreiten kann. Innerhalb dieses Zeitraumes ist im Brandfall die Feuerwehr üblicherweise vor Ort und kann Maßnahmen zum Löschen des Brandes einleiten.

Das Öffnen der Klappe des Behälters erfolgt bevorzugt unterstützt durch eine an der Klappe befestigte Gasdruckfeder. Weiterhin ist es von Vorteil, den Energiespeicher-Behälter fest verschließbar auszubilden. Hierzu verfügt die zugehörige Klappe über einen Verschlussmechanismus mit geeigneten Verschlussmitteln. Diese Verschlussmittel sind beispielsweise so ausgebildet, dass die Klappe entlang ihres Umfanges eine oder mehrere Schlitze aufweist, die in einem Metallkragen ausgeformt sind. In Eingriff mit diesen an der Klappe befindlichen Schlitzen lassen sich passend ausgebildete, beweglich und federbelastet gelagerte Stifte bringen, die beim Zudrücken der Klappe durch die Federbelastung in eine in den Schlitzen ausgeformte Rastposition gleiten. An Stelle eines Stiftes kann das in den Schlitz eingreifende Verschlussmittel auch durch ein federnd gelagertes Rad gebildet sein. Der Behälter wird durch ein Herunterdrücken der Klappe, der die federbelasteten Stifte in den Schlitzen in die Rastposition gleiten lässt. Das Öffnen des Behälters erfolgt mittels einer Verschlussbetätigung, der die Stifte entgegen ihrer Federbelastung aus der Rastposition der Schlitze herausbewegt und die Klappe freigibt. Dadurch reicht ein einfaches Anheben der Klappe nicht aus, um den Energiespeicher-Behälter des Behälters zu öffnen. Die Energiespeicher können auf diese Weise vor Diebstahl oder vor einem unerwünschten Zugriff beispielsweise von Kindern entzogen werden.

Des Weiteren ist der Energiespeicher-Behälter bevorzugt so ausgebildet, dass eventuell im Energiespeicher-Behälter entstehende Gase aus diesem entweichen können. Dazu verfügt der Energiespeicher-Behälter in der mindestens einen Energiespeicher-Behälterwand über einen Bereich, der mit einem Spezialtextil ausgestattet ist, das gasdurchlässig ist, aber auch das Durchschlagen von Flammen aus dem Energiespeicher-Behälter heraus verhindert.

Zur weiteren Erhöhung der Sicherheit des Behälters ist es von Vorteil, dass der Behälter eine den Energiespeicher-Behälter überwachende Brandwarneinrichtung aufweist. Die Brandwarneinrichtung ist bevorzugt unterhalb eines oder mehrerer portabler Energiespeicher im Bodenbereich des Energiespeicher-Behälters angeordnet. Se kann aber auch an einer anderen Stelle angeordnet sein, beispielsweise in der als Klappe ausgebildeten Oberseite des Behälters. Die Brandwarneinrichtung kann die Warnfunktion mittels eines Tones und/ oder visuellen Signals ausüben. Hierzu verfügt die Brandwarneinrichtung über Sgnaleinrichtungen zur Generierung eines Tones und/ oder visuellen Signals.

Eine vorteilhafte Weiterbildung der Brandwarneinrichtung sieht vor, dass die Brandwarneinrichtung weiterhin eine Brandlöscheinheit aufweist. Die Brandlöscheinheit ist so ausgebildet, dass ein im Inneren des Energiespeicher-Behälters auftretender Brand mittels eines Löschmittels gelöscht oder zumindest unterdrückt oder in seiner Brandausbreitung stark eingeschränkt wird. Als Löschmittel kann beispielsweise ein Löschgas oder ein anderes geeignetes Löschmittel oder eine Kombination aus beiden verwendet werden. Ein Übergreifen eines Brandes auf die Umgebung kann somit vollständig verhindert oder zumindest deutlich verzögert werden.

Alle vorangehend beschriebenen Ausführungsformen des Behälters sind bevorzugt derart weitergebildet, dass das Behältervolumen mindestens einen Ladeelektronik-Behälter aufweist, der zumindest durch die Energiespeicher-Behälterwand strukturell getrennt vom Energiespeicher-Behälter ausgebildet ist, wobei die Ladeelektronikeinrichtung im Ladelektronik-Behälter angeordnet ist. Hier gilt die vorangehende Definition, welche Bauelemente als zur Ladeelektronikeinrichtung zugehörig anzusehen sind. Die strukturelle Trennung von Ladelektronikeinrichtung und den elektrischen Energiespeichern erhöht weiterhin die Sicherheit des gesamten Behälters im Hinblick auf Brandrisiken.

Die Klappe ist als Deckel des Energiespeicher-Behälters und gleichzeitig als Deckel des Behälters ausgebildet. Auf diese Weise ist der Zugriff auf die im Behälter und dort wiederum im Energiespeicher-Behälter angeordneten elektrischen Energiespeicher durch das Öffnen einer einzigen Klappe ermöglicht.

Bei dem Behälter mit der als Deckel ausgebildeten Klappe bildet die Klappe eine Sitzfläche für mindestens eine Person auf dem Behälter aus. Der Behälter erfüllt damit eine zusätzliche Funktion, die in vielen Inneneinrichtungssituationen auf einfache Weise integrierbar ist. Die Sitzfläche kann gepolstert oder ungepolstert ausgebildet sein. Se kann einer, zwei, drei oder mehr Personen als Sitzfläche dienen. Die Klappe kann auch unterteilt ausgebildet sein, so dass nur ein Teil des Energiespeicher-Behälters geöffnet wird. Dies hat den Vorteil, dass der Behälter zum Entnehmen oder Hinzufügen eines oder mehrerer Energiespeicher geöffnet werden kann während eine oder mehrere Personen auf der Sitzfläche sitzen bleiben.

Jede der vorangehend beschriebenen Ausführungsformen des Behälters ist weiterhin bevorzugt derart ausgebildet, dass die Energiespeicher-Behälterwand in Form von Seitenwänden und einem Bodenteil zusammen mit der als Deckel des Energiespeicher-Behälters ausgebildeten Klappe ein quaderförmiges Speicherbehälter-Volumen bildet. In einem solchen quaderförmigen Speicherbehälter-Volumen lässt sich eine Mehrzahl quaderförmiger elektrischer Energiespeicher besonders effizient anordnen.

Alle vorangehenden Ausführungsformen sind vorteilhaft derart weitergebildet, dass der Behälter eine Anzeigeeinrichtung für den Status des portablen, aufladbaren elektrischen Energiespeichers aufweist. Die als elektronisches Display ausgebildete Anzeigevorrichtung ist beispielsweise geeignet zum Anzeigen des Ladezustands des Energiespeichers, der verbleibenden Ladezeit, von Störungen an der Ladeelektronikeinrichtung, des Ladeanschlusses und/oder Energiespeicher. Auch ein Anzeigen von Brand- oder Rauchentwicklung oder der Temperatur im Inneren des Behälters mittels der Anzeigevorrichtung ist vorteilhaft.

Alle vorangehenden Ausführungsformen sind mit Vorteil weiterhin dadurch gekennzeichnet, dass der Energiespeicher-Behälter mittels Tragwangen beabstandet von einer Aufstellfläche angeordnet ist. Der Energiespeicher-Behälter weist somit Tragwangen auf, die bevorzugt an seinen Seitenwänden befestigt sind. Diese Tragwangen sind so angeordnet und ausgebildet, dass unter dem Energiespeicher-Behälter und zwischen den Tragwangen genügend Raum verbleibt, der als Stauraum genutzt werden kann. Dieser Stauraum kann beispielsweise für das Abstellen von Schuhen oder ähnlichen Gegenständen genutzt werden. Auf diese Weise ist die Funktionalität des Behälters als Einrichtungsgegenstand noch weiter erhöht, was seine Integration in einer bestehenden Inneneinrichtungssituation vergrößert.

Alle vorangehenden Ausführungsformen sind vorteilhaft derart weitergebildet, dass die Energiespeicher-Behälterwand und die Klappe durch aufmontierte Verkleidungselemente nach außen hin kaschiert sind. Die Energiespeicher-Behälterwand und die Klappe können auf diese Weise mit individualisierten Verkleidungselementen verkleidet werden. Diese Verkleidungselemente können als Folienkaschierung, Kunststoff-, Holzfurnier- oder Metallbeschichtung auf einem Trägermaterial oder als massive Kunststoff-, Holz- oder Metallelemente ausgebildet sein. Die Verkleidungselemente sind bevorzugt austauschbar mit der Energiespeicher-Behälterwand verbunden. Sie können aber dauerhaft mit der Energiespeicher-Behälterwand verbunden sein. Mittels der Verkleidungselemente wird dem Behälter ein optisch ansprechendes Äußeres gegeben. Dadurch kann der Behälter beispielsweise gut und universell in Wohnungen integriert werden. Weiterhin bietet dieser Aufbau den Vorteil, dass eine hinsichtlich des Brandschutzes optimierte Ausgestaltung des Behälters durch einen standardisierten Aufbau in hohen Stückzahlen kostengünstig produzierbar ist. Die in ihrer optischen Anmutung vorzunehmende Individualisierung erfolgt durch das Aufbringen entsprechender Verkleidungselemente, die als Möbelbauteile in einer großen Vielfalt kostengünstig erhältlich sind.

Die Erfindung wird im Folgenden anhand einer rein beispielhaften Ausführungsform des Behälters unter Bezugnahme auf die Figuren weiter erläutert.

Hierbei zeigt:
Fig.1 eine bevorzugte Ausführungsform des Behälters in perspektivischer Darstellung von vorne mit geschlossener Klappe;
Fig.2 den Behälter aus Fig.1 in perspektivischer Darstellung von hinten mit geschlossener Klappe;
Fig.3 den Behälter aus Fig.1 bestückt mit vier elektrischen Energiespeichern (G) in perspektivischer Darstellung von vorne mit geöffneter Klappe;
Fig.4 den Behälter aus Fig.1 ohne Energiespeicher-Bestückung in perspektivischer Darstellung von oben links mit geöffneter Klappe;
Fig.5 den Behälter aus Fig.1 ohne Energiespeicher in perspektivischer Darstellung von oben rechts mit geöffneter Klappe und
Fig.6 den Behälter in der Darstellung aus Fig.4 ohne Energiespeicher in einer vergrößerten Detaildarstellung.

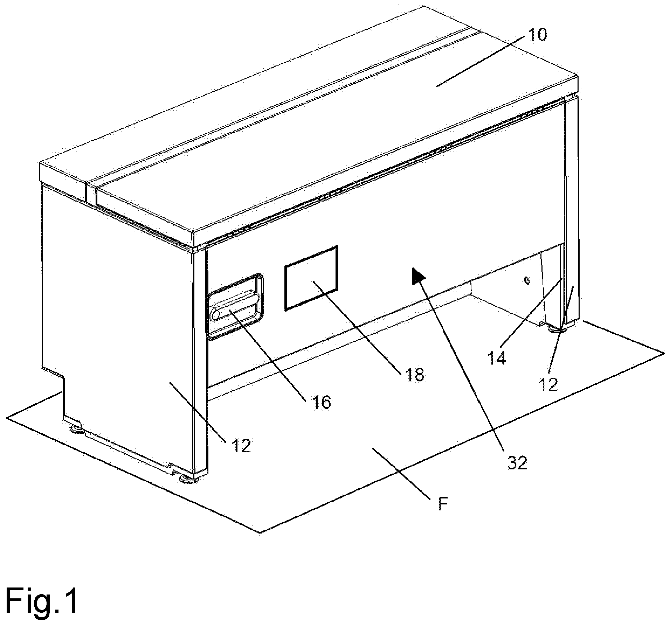

Figur 1 zeigt eine bevorzugte Ausführungsform eines Behälters mit einer im Wesentlichen quaderförmigen Außenkontur, die das Behältervolumen umschreibt und in perspektivischer Darstellung von vorne gezeigt ist. Der Behälter verfügt an seiner Oberseite über eine in dieser Darstellung geschlossene Klappe 10. Die Klappe 10 ist um eine horizontal verlaufende Achse verschwenkbar angelenkt und deckt einen in den nächsten Figuren näher gezeigten Energiespeicher-Behälter 32 mit einem Speicherbehälter-Volumen. Der Energiespeicher-Behälter 32 ist im Behältervolumen angeordnet und somit Teil des Behälters. An gegenüber liegenden Schmalseiten des Behälters befindet sich jeweils ein Verkleidungselement 12, das jeweils an einer Tragwange 14 befestigt ist. An den Tragwangen 14 sind Füße zum Aufstellen des Behälters auf einer Aufstellfläche F angebracht. Die Tragwangen 14 beabstanden den Energiespeicher-Behälter 32 von der Aufstellfläche F, so dass sich zwischen Aufstellfläche F und dem Boden des Energiespeicher-Behälters 32 ein Abstellbereich ausbildet. Wenn der Behälter als Sitzbank Verwendung findet, so bietet es sich an, den Abstellbereich unterhalb des Energiespeicher-Behälters 32 zum Beispiel für Schuhe zu nutzen.

An der Vorderseite des Behälters befindet sich eine Verschlussbetätigung 16. Die Verschlussbetätigung 16 dient dem Öffnen und Verriegeln der Klappe 10 des Behälters, die gleichzeitig als Klappe des Energiespeicher-Behälters 32 ausgebildet ist. Des Weiteren befindet sich an der Vorderseite des Behälters eine Anzeigeeinrichtung 18. Diese Anzeigeeinrichtung 18 dient dazu, den Ladezustand und weitere Parameter von Energiespeichern anzuzeigen, die im Energiespeicher-Behälter insbesondere zum Aufladen angeschlossen sind.

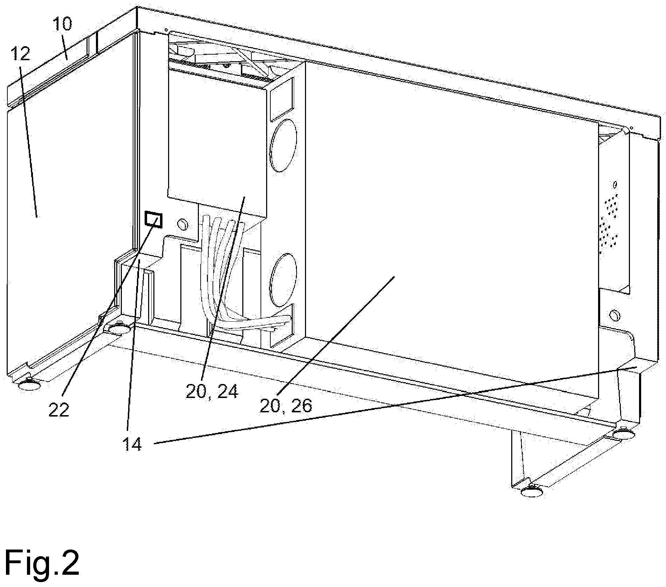

Figur 2 zeigt den in Figur 1 dargestellten Behälter in perspektivischer Ansicht von hinten. Gleiche Bauelemente sind mit gleichen Bezugszeichen gekennzeichnet und die vorangehend gemachten Ausführungen gelten entsprechend. Die Rückseite des Behälters zeigt Bauelemente der Ladeelektronikeinrichtung 20. Dazu gehört eine Transformatorbaugruppe 24 und eine Steuerelektronik 26. Zur elektrischen Energieversorgung der Ladeelektronikeinrichtung 20 ist ein elektrischer Anschluss 22 zum Anschließen an ein elektrisches Gebäudeversorgungsnetz vorgesehen.

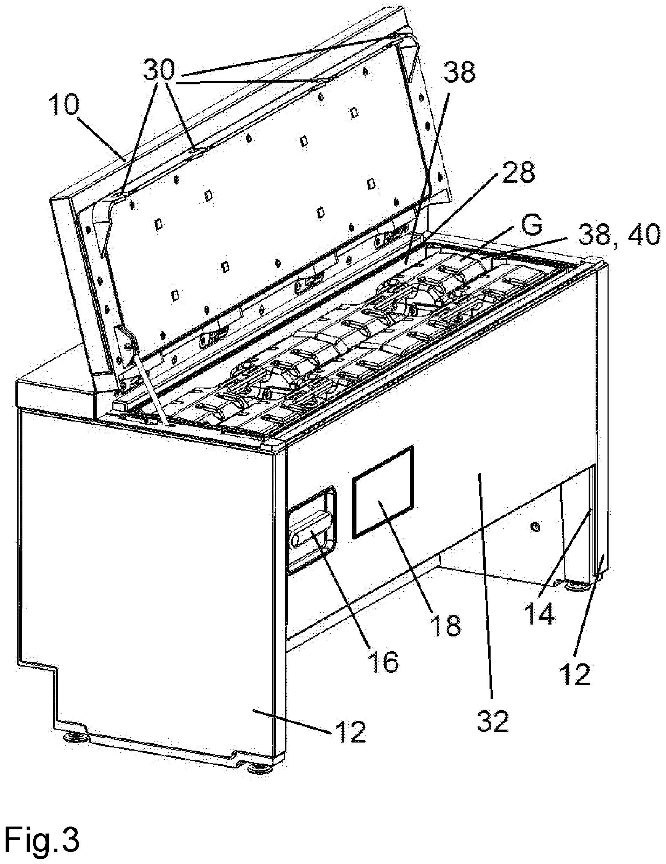

Figur 3 zeigt den in Figur 1 dargestellten Behälter in perspektivischer Ansicht von vorne. Gleiche Bauelemente sind mit gleichen Bezugszeichen gekennzeichnet. Die Klappe 10 des Energiespeicher-Behälters 32 ist geöffnet.

Die geöffnete Klappe 10 ermöglicht den Blick auf das Innere des Energiespeicher-Behälters 32. Das quaderförmige Speicherbehälter-Volumen des Energiespeicher-Behälter-Innenraums ist mit vier jeweils quaderförmigen elektrischen Energiespeichern (G) fast vollständig ausgefüllt. Entlang einer Öffnungskante des Energiespeicher-Behälters 32 ist eine Klappendichtung 28 vorgesehen. Diese Klappendichtung 28 und die das Speicherbehälter-Volumen des Energiespeicher-Behälters 32 begrenzenden Energiespeicher-Behälterwände 38 samt Klappe 10 sind als Bauelemente ausgeführt, die zumindest der Feuerwiderstandsklasse F30 genügen.

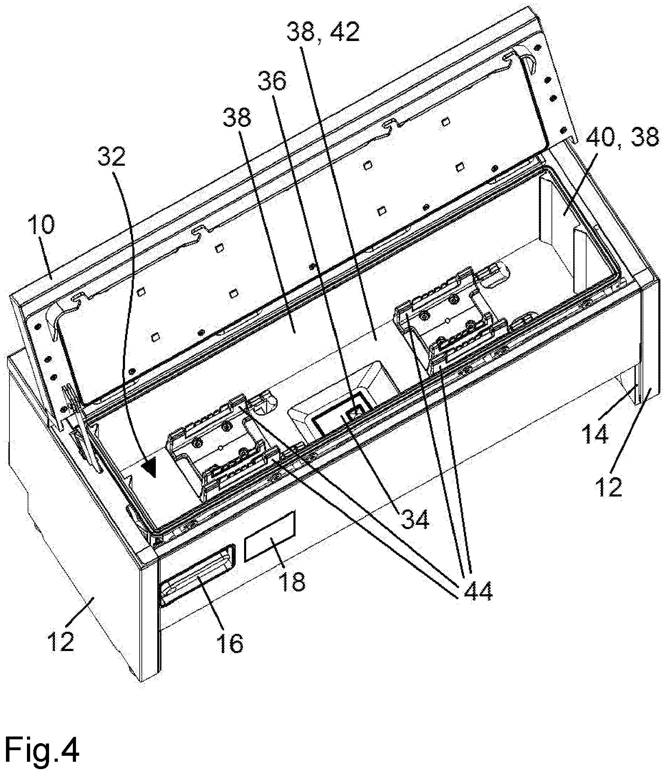

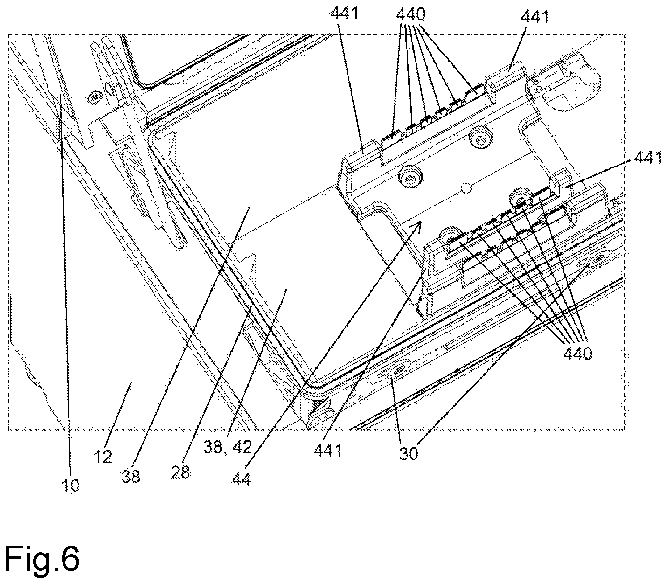

Figur 4 zeigt den in Figur 1 dargestellten Behälter in perspektivischer Ansicht von vorne. Gleiche Bauelemente sind mit gleichen Bezugszeichen gekennzeichnet. Die Klappe 10 des Behälters ist wiederum geöffnet. Anders als bei der Darstellung in Figur 3 sind im Energiespeicher-Behälter 32 keine elektrischen Energiespeicher G angeordnet. Dadurch ist der Blick freigegeben auf das quaderförmige Speicherbehältervolumen. Dieses wird durch Energiespeicher-Behälterwände 38 begrenzt, die nach oben hin als Klappe 10, an den gegenüber liegenden schmalen Seiten als Seitenwände 40 und nach unten hin als Bodenteil 42 ausgebildet sind. Im Bodenteil 42 sind eine Brandwarneinrichtung 34 sowie eine Brandlöscheinheit 36 angeordnet. Die Brandwarneinrichtung 34 gibt im Brandfall ein Warnsignal an die Anzeigeeinrichtung 18, die wiederum eine visuelle und/oder akustische Brandwarnung absetzt. Die Brandlöscheinheit 36 löscht einen im Energiespeicher-Behälter 32 auftretenden Brand mit einem gasförmigen oder einem andersartigen Löschmittel. Weiterhin sind auf dem Bodenteil 42 vier Ladeanschlüsse 44 zum elektrischen Kontaktieren von vier hier nicht gezeigten elektrischen Energiespeichern angeordnet. Einer der vier Ladeanschlüsse 44 ist in Figur 6 detaillierter dargestellt.

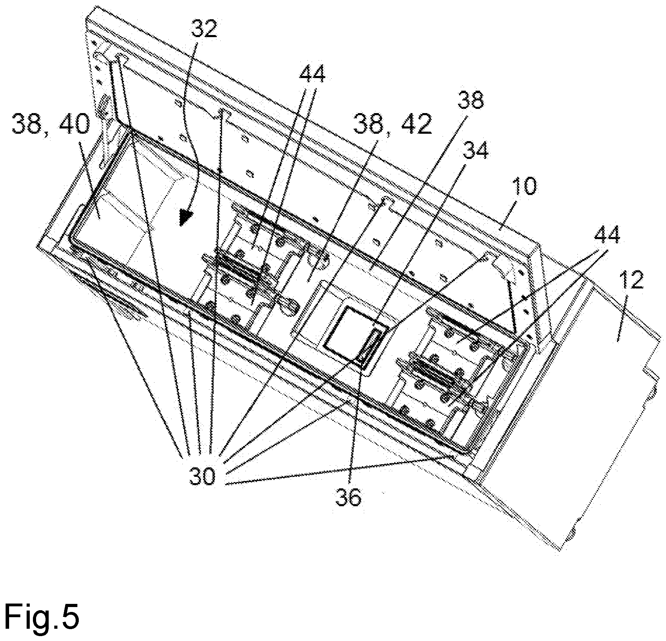

Figur 5 zeigt den Behälter aus Figur 4 in einer Ansicht ähnlich einer Vogelperspektive. Gleiche Bauelemente sind mit gleichen Bezugszeichen versehen und die gemachten Ausführungen gelten entsprechend. In der Perspektive der Figur 5 ist die paarweise Anordnung der vier Ladeanschlüsse 44 auf dem Bodenteil 42 besser erkennbar als in Figur 4. Weiterhin sind an der Klappe 10 an einem sich entlang der Längsseite der Klappe erstreckenden Kragen als Bestandteil eines Verschlussmechanismus 30 der Klappe 10 vier Öffnungen vorgesehen. In diese Öffnungen greifen am Rand des Energiespeicher-Behälters vorgesehene Rasträder 30 ein, wenn die Klappe 10 geschlossen wird. Diese Rasträder 30 sind in der Detailansicht der Figur 6 größer dargestellt.

Figur 6 zeigt eine Detaildarstellung aus Figur 4. Einer der vier Ladeanschlüsse 44 ist hier genauer dargestellt. Jeder der Ladeanschlüsse 44 verfügt über eine Mehrzahl linear hintereinander angeordneter Messerkontakte 440, die jeweils von zwei Zentriervorsprüngen 441 umgeben sind. Sowohl die Messerkontakte 440 als auch die Zentriervorsprünge 441 erstrecken sich in der gleichen Richtung im Wesentlichen senkrecht zum Bodenteil 42 der Energiespeicher-Behälterwand 38. Dadurch ist vorgegeben, dass die hier nicht dargestellten elektrischen Energiespeicher mit ihren komplementär zu den Ladeanschlüssen 44 ausgebildeten Anschlussbuchsen von oben auf die Ladeanschlüsse 44 aufgesetzt und in die gleiche Richtung von diesen entfernt werden.

Vom Verschlussmechanismus 30 sind hier zwei der insgesamt vier beweglich gelagerten Rasträder 30 gezeigt, die in die im Kragen des Deckels 10 angeordneten Schlitze 30 des Verschlussmechanismus 30 einrasten und durch das Betätigen der Verschlussbetätigung 16 wieder aus diesem Eingriff lösbar sind. Nach dem Lösen des Eingriffs der Rasträdchen 30 lässt sich die Klappe 10 hochklappen, um den Zugriff auf das Speicherbehälter-Volumen freizugeben.

### Bezugszeichenliste:

- F: Aufstellfläche
- G: elektrischer Energiespeicher
- 10: Klappe
- 12: Verkleidungselement
- 14: Tragwange
- 16: Verschlussbetätigung
- 18: Anzeigeeinrichtung
- 20: Ladeelektronikeinrichtung
- 22: elektrischer Anschluss
- 24: Transformatorbaugruppe
- 26: Steuerelektronik
- 28: Klappendichtung
- 30: Verschlussmechanismus
- 32: Energiespeicher-Behälter
- 34: Brandwarneinrichtung
- 36: Brandlöscheinheit
- 38: Energiespeicher-Behälterwand
- 40: Seitenwand
- 42: Bodenteil
- 44: Ladeanschluss
- 440: Messerkontakt
- 441: Zentriervorsprung

## Patentansprüche

1. Behälter, der sich für mindestens eine Person als Sitzgelegenheit eignet, mit einer Behälter-Außenkontur aufweisend ein durch die Behälter-Außenkontur umschlossenes Behältervolumen mit
- einem im Behältervolumen angeordneten Energiespeicher-Behälter (32) mit einem Speicherbehälter-Volumen, der durch mindestens eine Energiespeicher-Behälterwand (38) begrenzt und vollständig gegenüber Berührung von außen geschützt ist, wobei der Energiespeicher-Behälter (32) zur vollständigen Aufnahme mindestens eines portablen, aufladbaren elektrischen Energiespeichers (G) ausgebildet ist;
- mindestens einem im Energiespeicher-Behälter (32) angeordneten Ladeanschluss (44) für den portablen, aufladbaren elektrischen Energiespeicher (G);
- einer im Behältervolumen angeordneten Ladeelektronikeinrichtung (20) zur Ladesteuerung eines an den Ladeanschluss (44) angeschlossenen portablen, aufladbaren elektrischen Energiespeichers (G),
- einem elektrischen Anschluss (22) zum Versorgen der Ladeelektronikeinrichtung (20) des Behälters mit elektrischer Energie aus einem externen Energie-Versorgungsnetz und
- einer in der mindestens einen Energiespeicher-Behälterwand (38) ausgebildeten Klappe (10), mit der der Energiespeicher-Behälter (32) gegenüber der Umgebung des Behälters öffenbar und verschließbar ist, wobei die Klappe (10) so dimensioniert ist, dass sich der portable, aufladbare elektrische Energiespeicher in den Energiespeicher-Behälter (32) einsetzen und aus dem Energiespeicher-Behälter (32) herausnehmen lässt,
wobei die Ladeelektronikeinrichtung (20) außerhalb des Energiespeicher-Behälters (38) im Behältervolumen angeordnet ist,
**dadurch gekennzeichnet, dass** die Klappe (10) einen Verschlussmechanismus (30) und eine Klappendichtung (28) aufweist, wobei die Klappe (10), die Klappendichtung (28) und die mindestens eine Energiespeicher-Behälterwand (38) als Bauelemente ausgeführt sind, die zumindest der Feuerwiderstandsklasse F30 genügen, die Klappe (10) als Deckel des Energiespeicher-Behälters (32) und gleichzeitig als Deckel des Behälters ausgebildet ist und die Klappe (10) eine Sitzfläche für mindestens eine Person auf dem Behälter ausbildet.

2. Behälter nach Anspruch 1, **dadurch gekennzeichnet, dass** der Behälter eine den Energiespeicher-Behälter (32) überwachende Brandwarneinrichtung (34) aufweist.

3. Behälter nach Anspruch 2, **dadurch gekennzeichnet, dass** die Brandwarneinrichtung (34) weiterhin eine Brandlöscheinheit (36) aufweist.

4. Behälter nach einem der vorangehenden Ansprüche, **dadurch gekennzeichnet, dass** das Behältervolumen mindestens einen Ladeelektronik-Behälter aufweist, der zumindest durch die Energiespeicher-Behälterwand (38) strukturell getrennt vom Energiespeicher-Behälter (32) ausgebildet ist, wobei die Ladeelektronikeinrichtung (20) im Ladelektronik-Behälter angeordnet ist.

5. Behälter nach einem der Ansprüche 1 bis 4, **dadurch gekennzeichnet, dass** die Energiespeicher-Behälterwand (38) in Form von Seitenwänden (40) und einem Bodenteil (42) zusammen mit der als Deckel des Energiespeicher-Behälters (32) ausgebildeten Klappe (10) ein quaderförmiges Speicherbehälter-Volumen bildet.

6. Behälter nach einem der vorangehenden Ansprüche, **dadurch gekennzeichnet, dass** der Behälter eine Anzeigeeinrichtung (18) für den Status des portablen, aufladbaren elektrischen Energiespeichers (G) aufweist.

7. Behälter nach einem der vorangehenden Ansprüche, **dadurch gekennzeichnet, dass** der Energiespeicher-Behälter (32) mittels Tragwangen (14) beabstandet von einer Aufstellfläche (F) angeordnet ist.

8. Behälter nach einem der vorangehenden Ansprüche, dass die Energiespeicher-Behälterwand (38) und die Klappe (10) durch aufmontierte Verkleidungselemente (12) nach außen hin kaschiert sind.

## Claims

1. A container suitable for at least one person as a seating area, having a container outercontour, comprising a container volume enclosed by the container outercontour having
- an energy storage container (32) arranged in the container volume, having a storage container volume which is limited by at least one energy storage container wall (38) and completely protected against external contact, wherein the energy storage container (32) is designed for the complete reception of at least one portable, rechargeable electrical energy storage (G);
- at least one charging port (44) arranged in the energy storage container (32), for the portable, rechargeable electrical energy storage (G);
- a charging electronics device (20) arranged in the container volume, for charging control of a portable, rechargeable electrical energy storage (G) connected to the charging port (44),
- an electrical connection (22) for feeding the charging electronics device (20) of the container with electrical energy from an external power supply network and
- a flap (10) formed in the at least one energy storage container wall (38), by which the energy storage container (32) is openable and lockable in relation to the environment of the container, wherein the flap (10) is dimensioned in such a way that the portable, rechargeable electrical energy storage can be inserted into the energy storage container (32) and can be taken out of the energy storage container (32),
wherein the charging electronics device (20) is arranged outside the energy storage container (38) in the container volume,
**characterized in that** the flap (10) has a locking mechanism (30) and a flap seal (28), wherein the flap (10), the flap seal (28) and the at least one energy storage container wall (38) are designed as components which at least satisfy the fire resistance class F30, the flap(10) is formed as lid of the energy storage container (32) and at the same time as lid of the container and the flap (10) forms a seat surface for at least one person on the container..

2. The container according to claim 1, **characterized in that** the container has a fire warning device (34) monitoring the energy storage container (32).

3. The container according to claim 2, **characterized in that** the fire warning device (34) has further a fire extinguishing unit (36).

4. The container according to anyone of the preceding claims, **characterized in that** the container volume has at least one charging electronics container which is formed at least by the energy storage container wall (38) structurally separated from the energy storage container (32), wherein the charging electronics device (20) is arranged in the charging electronics container.

5. The container according to any anyone of claims 1 to 4, **characterized in that** the energy storage container wall (38) in the form of side walls (40) and a bottom part(42) together with the flap (10) formed as lid of the energy storage container (32) forms a cuboid-shaped storage container volume.

6. The container according to anyone of the preceding claims, **characterized in that** the container has a display device (18) for the status of the portable, rechargeable electrical energy storage (G).

7. The container according to anyone of the preceding claims, **characterized in that** the energy storage container (32) is spaced apart from an installation area (F) by means of supporting flanges (14).

8. The container according to anyone of the preceding claims, **characterized in that** the energy storage container wall (38) and the flap (10) are covered outwardly by mounted cladding elements (12).

## Revendications

1. Un récipient adapté à au moins une personne comme siège ayant un contour de récipient extérieur, comprenant un volume de récipient environné par le contour de récipient extérieur ayant
- un récipient de stockage d'énergie (32) disposé dans le volume de récipient qui a un volume de récipient de stockage qui est limité par au moins un mur de récipient de stockage d'énergie (38) et complètement protégé contre un contact externe, dans lequel le récipient de stockage d'énergie (32) est conçu pour la réception complète d'au moins un stockage d'énergie électrique rechargeable portable (G);
- au moins un port de charge (44) disposé dans le récipient de stockage d'énergie (32), pour le stockage d'énergie électrique rechargeable portable (G);
- un dispositif électronique de charge (20) disposé dans le volume de récipient disposé pour un contrôle de charge d'un stockage d'énergie électrique rechargeable portable (G) connecté au port de charge (44),
- une connexion électrique (22) pour l'alimentation du dispositif électronique de charge (20) du récipient avec de l'énergie électrique à partir d'un réseau électrique externe et
- un clapet (10) formé dans l'au moins un mur de récipient de stockage d'énergie (38), avec lequel le récipient de stockage d'énergie (32) peut être ouvert et fermé par rapport à l'environnement du récipient, dans lequel le clapet (10) est dimensionné de telle sorte que le stockage d'énergie électrique rechargeable portable peut être inséré dans le récipient de stockage d'énergie (32) et peut être retiré du récipient de stockage d'énergie (32),
dans lequel le dispositif électronique de charge (20) est disposé à l'extérieur du récipient de stockage d'énergie (38) dans le volume de récipient,
**caractérisé en ce que** le clapet (10) a un mécanisme de verrouillage (30) et un joint clapet (28), dans lequel le clapet (10), le joint clapet (28) et l'au moins un mur de récipient de stockage d'énergie (38) sont conçus comme des composants qui satisfont au moins la classe de résistance au feu F30, le clapet(10) est formé comme couvercle du récipient de stockage d'énergie (32) et en même temps comme couvercle du récipient et le clapet (10) forme une surface de siège pour au moins une personne sur le récipient.

2. Le récipient selon la revendication 1, **caractérisé en ce que** le récipient a un dispositif d'avertissement d'incendie (34) surveillant le récipient de stockage d'énergie (32).

3. Le récipient selon la revendication 2, **caractérisé en ce que** le dispositif d'avertissement d'incendie (34) a en outre une unité d'extinction d'incendie (36).

4. Le récipient selon l'une des revendications précédentes, **caractérisé en ce que** le volume de récipient a au moins un récipient électronique de charge qui est formé de manière structurellement séparé par le mur de récipient de stockage d'énergie (38) du récipient de stockage d'énergie (32), dans lequel le dispositif électronique de charge (20) est disposé dans le récipient électronique de charge.

5. Le récipient selon l'une des revendications 1 à 4, **caractérisé en ce que** le mur de récipient de stockage d'énergie (38) sous la forme de murs latéraux (40) et une partie inférieure (42) avec le clapet (10) formé comme couvercle du récipient de stockage d'énergie (32) forme un volume de récipient de stockage en forme de parallélépipède rectangle.

6. Le récipient selon l'une des revendications précédentes, **caractérisé en ce que** le récipient a un dispositif d'affichage (18) pour l'état du stockage d'énergie électrique rechargeable portable (G).

7. Le récipient selon l'une des revendications précédentes, **caractérisé en ce que** le récipient de stockage d'énergie (32) est espacé au moyen de flasques de soutien (14) d'une surface de pose (F).

8. Le récipient selon l'une des revendications précédentes, **caractérisé en ce que** le mur de récipient de stockage d'énergie (38) et le clapet (10) sont cachés vers l'extérieur par des éléments de revêtement montés (12).
